# EUROPÄISCHE PATENTSCHRIFT

(11) **EP 3 182 652 B1**
(45) Veröffentlichungstag und Bekanntmachung des Hinweises auf die Patenterteilung: **14.08.2019**
(21) Anmeldenummer: 16203640.4
(22) Anmeldetag: 13.12.2016
(51) Int. Cl.: H04L 12/417, H04L 12/44

(54) **VERFAHREN ZUR PERIODISCHEN ERFASSUNG VON MESSWERTEN IN EINEM ECHTZEITCOMPUTERSYSTEM SOWIE ECHTZEITCOMPUTERSYSTEM**
METHOD FOR PERIODIC MEASUREMENT OF MEASURED VALUES IN A REAL TIME COMPUTER SYSTEM AND REAL TIME COMPUTER SYSTEM
PROCÉDÉ DE DÉTECTION PÉRIODIQUE DE VALEURS DE MESURE DANS UN SYSTÈME INFORMATIQUE EN TEMPS RÉEL ET SYSTÈME INFORMATIQUE EN TEMPS RÉEL

(30) Priorität: 14.12.2015 AT 510602015
(43) Veröffentlichungstag der Anmeldung: 21.06.2017
(73) Patentinhaber: TTTech Auto AG, 1040 Wien (AT)
(72) Erfinder: Kopetz, Hermann, 2500 Baden (AT)
(74) Vertreter: Patentanwaltskanzlei Matschnig & Forsthuber OG

(56) Entgegenhaltungen:
- WO-A1-2014/186814
- WO-A1-2015/164897
- WO-A1-2015/185749

## Beschreibung

Die Erfindung betrifft ein Verfahren zur periodischen Erfassung von Messwerten in einem Echtzeitcomputersystem, insbesondere ein einem verteilten Echtzeitcomputersystem, welches Echtzeitcomputersystem, insbesondere verteilte Echtzeitcomputersystem, eine Vielzahl von Sensoren, insbesondere intelligente Sensoren, Knotenrechner und Verteilereinheiten, umfasst, wobei die Sensoren, insbesondere intelligenten Sensoren, die Knotenrechner und die Verteilereinheiten Zugriff auf eine globale Zeit haben, und wobei Echtzeitdaten in dem Echtzeitcomputersystem mittels zeitgesteuerter Echtzeitnachrichten transportiert werden, wobei in dem Echtzeitcomputersystem, insbesondere systemweit, periodisch wiederkehrende globale Beobachtungszeitpunkte am Beginn eines Frames festgelegt sind oder werden, und wobei jeder einen Sensor, insbesondere einen physikalischen Sensor, kontrollierende Knotenrechner ein Trigger-Signal an den Sensor, insbesondere den physikalischen Sensor, ausgibt.

Weiters betrifft die Erfindung ein Echtzeitcomputersystem, insbesondere verteiltes Echtzeitcomputersystem, welches Echtzeitcomputersystem, insbesondere verteilte Echtzeitcomputersystem, eine Vielzahl von Sensoren, insbesondere intelligente Sensoren, Knotenrechner und Verteilereinheiten umfasst, wobei die Sensoren, insbesondere intelligenten Sensoren, die Knotenrechner und die Verteilereinheiten Zugriff auf eine globale Zeit haben, und wobei Echtzeitdaten in dem Echtzeitcomputersystem mittels zeitgesteuerter Echtzeitnachrichten transportiert werden, wobei in dem Echtzeitcomputersystem, insbesondere systemweit, periodisch wiederkehrende globale Beobachtungszeitpunkte am Beginn eines Frames festgelegt sind oder werden, und wobei jeder einen Sensor, insbesondere einen physikalischen Sensor, kontrollierende Knotenrechner ein Trigger-Signal an den Sensor, insbesondere den physikalischen Sensor, ausgibt.

Ein eingangs genanntes Verfahren und Computersystem ist aus der WO 2014/186814 A1 bekannt. Weiters beschreibt die WO 2015/164897 A1 ein verteiltes Computersystem und ein Verfahren zur zeitgesteuerten Kommunikation in einem solchen Computersystem.

Die WO 2015/185749 A1 beschreibt eine Vorrichtung und ein Verfahren zur Hinderniserkennung. In diesem Zusammenhang beschreibt dieses Dokument, dass für eine genaue Synchronisierung zu berücksichtigen ist, dass es zwischen dem Zeitpunkt der Entscheidung, eine Aufnahme zu machen, und dem Zeitpunkt, an dem die Aufnahme tatsächlich gemacht wird, eine Verzögerung gibt.

Ein verteiltes Echtzeitcomputersystem umfasst eine Vielzahl von Sensoren und Aktuatoren, die über Verteilereinheiten mit einer Vielzahl von Knotenrechnern, die die Verarbeitung von Daten vornehmen, Nachrichten austauschen.

Ein verteiltes Echtzeitcomputersystem ist *zeitgesteuert,* wenn der periodisch wiederkehrende Zeitpunkt, zu dem eine Nachricht von einem Sender zu senden ist, vom Fortschreiten einer globalen Zeit bestimmt wird. Ein zeitgesteuertes Echtzeitcomputersystem setzt voraus, dass die Sensoren und Aktuatoren, die Knotenrechner und die Verteilereinheiten Zugriff auf eine *globale Zeit* bekannter Genauigkeit haben.

In einem zeitgesteuerten Echtzeitcomputersystem erfolgt eine strikte Trennung von *Kommunikation* und *Datenverarbeitung.* In einem zeitgesteuerten verteilten Echtzeitcomputersystem erfolgt die Kommunikation vornehmlich über *zeitgesteuerte Zustandsnachrichten,* deren Sendezeitpunkte und Empfangszeitpunkte in einem a priori erstellten Zeitplan oder Zeitplänen enthalten sind.

Die *Zugriffssemantik* zu den Daten einer zeitgesteuerten Zustandsnachricht entspricht weitgehend der Zugriffssemantik zu einer Variablen in einer Programmiersprache. Beim Lesen durch einen Empfangsprozess wird der aktuelle Wert der Zustandsnachricht übermittelt. Beim Eintreffen einer neuen Zustandsnachricht wird der alte Wert überschrieben. Eine genaue Beschreibung der Zugriffssemantik der Zustandsnachrichten findet sich in [1].

Ein *Cyber-Physical System (CPS)* besteht aus einer physikalischen Anlage, die von einem vorzugsweise verteilten Echtzeitcomputersystem gesteuert wird. Die physikalischen Prozesse in der Anlage müssen mit den Rechenprozessen in dem Echtzeitcomputersystem synchronisiert werden. Die *physikalischen Prozesse* in der Anlage können von den *Rechenprozessen* in dem verteilten Echtzeitcomputersystem gesteuert werden.

Ein *verteiltes Echtzeitcomputersystem* wie eingangs beschrieben besteht beispielsweise aus einer *Prozessperipherie* zur Beobachtung und Steuerung der physikalischen Prozesse in der Anlage, einer *Vielzahl von Knotenrechnern mit Anwendungssoftware* zur Verarbeitung der anfallenden Daten, und einem *Kommunikationssystem* mit Kommunikationskanälen und Verteilereinheiten zum Transport von Echtzeitnachrichten zwischen der Prozessperipherie und den Knotenrechnern.

Die Prozessperipherie besteht aus Sensoren, insbesondere *intelligenten Sensoren* und vorzugsweise Aktuatoren, insbesondere *intelligenten Aktuatoren.*

Ein *intelligenter Sensor* ist ein Gerät, das die zu erfassenden Prozessdaten zuerst in ein Bitmuster wandelt. Dieses Bitmuster wird im Rahmen der *Vorverarbeitung* auf Plausibilität überprüft und in eine physikalische Messgröße umgeformt. Anschließend wird die Messgröße in einer Nachricht an Empfänger, insbesondere die interessierten Empfänger, gesendet.

Ein *intelligenter Aktuator* ist ein Gerät, das einen in einer Nachricht empfangenen Sollwert zum vorgegebenen Zeitpunkt in eine physikalische Größe wandelt und damit den physikalischen Prozess in der physikalischen Anlage beeinflusst.

Während der Fortgang der physikalischen Prozesse in der Anlage, der *Anlagenprozesse,* vom Fortschreiten der physikalischen Zeit abhängt, werden die Fortschritte des Echtzeitcomputersystems, der *Computerprozesse,* von der Geschwindigkeit der Programmabarbeitung im Echtzeitcomputersystem bestimmt.

Eine Methode zur Synchronisation der *Anlagenprozesse* mit den *Computerprozessen* basiert auf der Einführung von *äquidistanten periodischen Synchronisationspunkten.* Es ist vorteilhaft, wenn an jedem Synchronisationspunkt der physikalische Prozess mittels aller verfügbaren physikalischen Sensoren *gleichzeitig* beobachtet wird. Die gleichzeitige Beobachtung aller Prozessdaten stellt sicher, dass zeitlich bedingte Änderungen im Prozessgeschehen nicht die zum Beobachtungszeitpunkt bestehenden Beziehungen zwischen den beobachteten Prozessdaten verfälschen.

Das zeitliche Intervall zwischen zwei aufeinanderfolgenden Synchronisationspunkten bezeichnet man als *Frame.* Die Dauer eines Frames wird von der Dynamik der physikalischen Prozesse in der Anlage bestimmt. Unter der Dynamik eines physikalischen Prozesses wird der Maximalwert der Ableitung einer bzw. der den Prozess beschreibenden Variablen V nach der Zeit t verstanden.

In der Entwurfsphase des Echtzeitcomputersystems ist die Dauer D eines Frames so zu wählen, dass selbst im Extremfall der höchsten Dynamik des physikalischen Prozesses die Änderung *D*. *Max*/*dV*/*dt* / einer kontinuierlichen Prozessvariablen innerhalb eines Frames keinen wesentlichen Einfluss auf die gestellte Aufgabe bewirkt.

Die Wahl der Dauer eines Frames soll am Beispiel eines *Airbags Auslösesystems* in einem Fahrzeug erklärt werden. Wenn sich ein Fahrzeug mit einer Geschwindigkeit von 30 m/sec (das sind 108 km/h) bewegt, so verändert sich seine Position in einem Zeitintervall von 1 msec um 3 cm. Wenn eine *Framedauer von 100 µsec* gewählt wird, so hat die Positionsänderung von 3 mm innerhalb eines Frames keinen wesentlichen Einfluss auf das Prozessgeschehen.

In einem strikt *frame-basierten System* erfolgen während der Dauer eines Frames keine Eingaben von einem physikalischen Prozess an einen Computerprozess. In einem solchen *zeitgesteuerten verteilten Computersystem* gibt es nur ein *wesentliches globales Interrupt-Signal,* den systemweit synchronisierten periodischen Uhreninterrupt, der den Beginn eines neuen Frames signalisiert. In einem strikt *frame-basierten System* laufen die Computerprozesse während der Dauer eines Frames unbeeinflusst von den physikalischen Prozessen in der Anlage ab.

In einem strikt *frame-basierten System* beobachten unterschiedliche Sensoren den physikalischen Prozess ausschließlich zu festgelegten global synchronisierten *Beobachtungszeitpunkten.* Im Allgemeinen sind die *Beobachtungszeitpunkte* mit den Beginn-Zeitpunkten eines Frames synchronisiert.

Es ist eine Aufgabe der Erfindung, eine Lösung dafür anzugeben, wie in einem Echtzeitcomputersystem, insbesondere einem verteilten Echtzeitcomputersystem, Sensordaten zu periodisch wiederkehrenden Beobachtungszeitpunkten synchron erfasst werden können.

Erfindungsgemäß ist vorgesehen, dass jeder einen Sensor kontrollierende Knotenrechner das Trigger-Signal zu einem sensor-spezifischen Trigger-Zeitpunkt des durch den Knotenrechner kontrollierten Sensors, welcher spezifische Trigger-Zeitpunkt sich aus der Differenz zwischen dem globalen Beobachtungszeitpunkt minus einem sensor-spezifischen Auftaktintervall errechnet, an den Sensor ausgibt, und wobei im Falle, dass ein einen Messwert produzierender Sensor, insbesondere intelligenter Sensor, ausgefallen ist, wird dieser Messwert auf Basis bekannter naturgesetzlicher Beziehungen zwischen den vorhandenen Messwerten errechnet.

Insbesondere kann auf diese Weise erreicht werden, dass unterschiedliche Sensoren, insbesondere unterschiedliche physikalische Sensoren, welche unterschiedlich lange *Auftaktintervalle* haben können, trotzdem zum selben globalen Beobachtungszeitpunkt ihre Beobachtung durchführen, und notfalls können ausgefallene Messwerte durch berechnete Messwerte ersetzt werden.

Vorteilhafte Ausgestaltungen der erfindungsgemäßen Verfahren und des erfindungsgemäßen Computersystems, insbesondere verteilten Echtzeit-Computersystems, welche jeweils für sich allein oder in beliebiger Kombination realisiert sein können, sind im Folgenden aufgezählt:
- im Falle, dass *Umfeld-Informationen* eine geringere Dynamik haben als *rohe Sensordaten,* errechnet ein einen Sensor kontrollierender Knotenrechner aus den *rohen Sensordaten* einen geforderten Messwert zum Beobachtungszeitpunkt unter Einbeziehung von, insbesondere vorab erfassten, *Umfeld-Informationen,* oder im Falle, dass *Umfeld-Informationen* die gleiche oder eine höhere Dynamik haben als *rohe Sensordaten,* errechnet ein einen Sensor kontrollierender Knotenrechner auf ein Eintreffen von Nachrichten mit *Umfeld-Informationen* von anderen Quellen wartet und unter Berücksichtigung solcher Umfeld-Informationen, die zum im Wesentlichen gleichen Zeitpunkt erfasst wurden wie die rohen Sensordaten, den geforderten Messwert;
- Messwerte werden in zeitgesteuerten Zustandsnachrichten übertragen;
- als Kommunikationsprotokoll zur zeitgesteuerten Nachrichtenübertragung wird TTEthernet verwendet.

Im Folgenden wird die Erfindung an Hand der Zeichnung näher erläutert. In dieser zeigt
Fig. 1 eine typische Abfolge von Ereignissen innerhalb eines zeitgesteuerten Frames, und
Fig. 2 beschreibt das dynamische Verhalten des Erfassungsprozesses eines intelligenten Sensors.

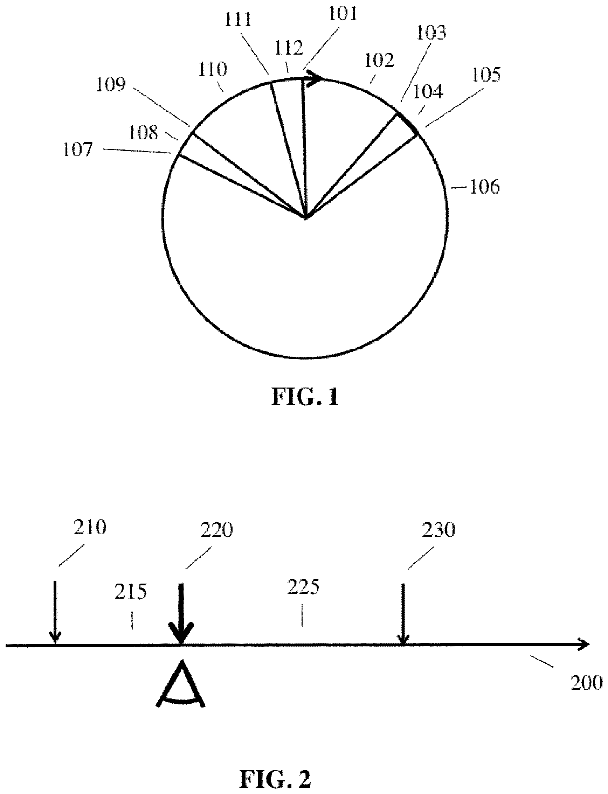

Fig. 1 zeigt eine typische Abfolge der Ereignisse innerhalb eines zeitgesteuerten Frames. Zum *Beobachtungszeitpunkt* **101,** dem Beginn eines Frames, der auch den *globalen Synchronisationszeitpunkt* markiert, wird von allen Sensoren gleichzeitig der physikalische Prozess beobachtet. Im Zeitintervall **102,** dem *Vorverarbeitungsintervall* werden die Sensordaten ausgelesen und vorverarbeitet. Zum Zeitpunkt **103,** dem *Lieferzeitpunkt* wird mit dem Senden der Nachricht, die die vorverarbeiteten Sensordaten enthält, begonnen. Nach dem im Zeitplan vorgegebenen Übertragungsintervall **104** trifft zum Zeitpunkt **105** die Nachricht im empfangenden Knotenrechner ein, der im Zeitintervall **106** die Sollwerte errechnet. Zum Zeitpunkt **107** beginnt dieser Knotenrechner die Nachricht mit den Sollwerten an den intelligenten Aktuator zu senden. Nach dem Übertragungszeitintervall **108** trifft diese Nachricht zum Zeitpunkt **109** bei einem, vorzugsweise intelligenten, Aktuator ein, der nach dem Verzögerungsintervall **110** zum Zeitpunkt **111** die Sollwerte der physikalischen Anlage übergibt.

Im Zeitintervall **112,** dem Intervall zwischen der Fertigstellung **111** der Berechnung in diesem Frame und dem Beginn des nächsten Frames **101** ist der innere Zustand des Systems eindeutig definiert.

Im Folgenden wird zwischen dem Begriff *Information* und dem Begriff *Daten* klar differenziert. Eine *Information* ist eine *Aussage über den Zustand von Dingen oder Konstrukten in der Welt. Daten* sind *Muster,* im Cyber-Space *Bit-Muster,* die vornehmlich von einem physikalischen Sensor zu einem Zeitpunkt erfasst werden. Die *Information,* die ein physikalischer Sensor liefert, ergibt sich aus dem Triple {*Daten, Zeitpunkt der Erfassung der Daten* und *Erklärung der Daten*} [2]. Wir bezeichnen dieses Triple {*Daten, Zeitpunkt der Erfassung der Daten* und *Erklärung der Daten}* als eine *Beobachtung.* Ein *Messwert* ist eine *Beobachtung* der physikalischen Anlage.

Ein *physikalischer Sensor* ist ein Gerät, das einen ausgewählten Aspekt des physikalischen Zustands seiner unmittelbaren Umgebung erfasst und das, entsprechend seiner Konstruktion, *rohe Sensordaten* (Bitmuster) generiert. Aus den rohen Sensordaten, der *Erklärung* über die Konstruktion des Sensors und zusätzlichen *Informationen* über das *Umfeld der Messung* können die beabsichtigten *Messwerte* der erfassten physikalischen Zustandsgrößen abgeleitet werden. Die Darstellung eines Messwerts wird vom gegebenen Kontext bestimmt. Zum Beispiel stellt man den Messwert *Temperatur* in Europa in *Grad Celsius,* in den USA hingegen in *Grad Fahrenheit* dar.

Die Zusammenfassung eines physikalischen Sensors mit einem Knotenrechner, der die rohen Sensordaten verarbeitet und die geforderten Messwerte ermittelt, die in *Sensornachrichten* verpackt über ein Computernetzwerk zur weiteren Verarbeitung an andere Knotenrechner gesendet werden, bezeichnet man als *intelligenten Sensor.* Auf dem Markt werden intelligente Sensoren häufig als kompakte Baueinheiten mit einer Schnittstelle zu einem standardisierten Echtzeitkommunikationssystem angeboten. In der Folge wird zur Vereinfachung angenommen, dass alle Sensoren *intelligente Sensoren* sind.

**Fig. 2** beschreibt das dynamische Verhalten des Erfassungsprozesses eines Sensors, insbesondere eines *intelligenten Sensors,* das im Wesentlichen durch *drei Zeitpunkte* charakterisiert werden kann. Auf der Abszisse **200** der Fig. 2 ist das Fortschreiten der globalen Zeit eingetragen Zum *Trigger-Zeitpunkt* **210** wird der Erfassungsprozess des Sensors, insbesondere des physikalischen Sensors, von dem ihm zugeordneten, ihn kontrollierenden Knotenrechner durch die Ausführung eines *Trigger-Signals* gestartet. Zum *Beobachtungs-Zeitpunkt* **220** wird der ausgewählte Zustand der Umgebung beobachtet. Zum a priori festgelegten *Lieferzeitpunkt* werden die erfassten Messwerte dem zeitgesteuerten Kommunikationssystem zum Transport an die anderen Knotenrechner übergeben.

Das Zeitintervall zwischen dem *Trigger-Zeitpunkt* **210** und dem *Beobachtungszeitpunkt* **220** bezeichnet man *Auftaktintervall* ***215*.** Das Zeitintervall zwischen dem *Beobachtungszeitpunkt* **220** und dem *Lieferzeitpunkt* **230** bezeichnet man als *Vorverarbeitungsintervall* **225.** Die Dauern des *Auftaktintervalls* **215** und des *Vorverarbeitungsintervalls* **225** werden von der Konstruktion eines Sensors bestimmt. Im Allgemeinen weisen unterschiedliche Sensoren unterschiedliche *Auftakt-* und *Vorverarbeitungsintervalle* auf.

Der sensor-spezifische Trigger-Zeitpunkt **210** ergibt sich aus der Differenz zwischen dem (globalen) Beobachtungszeitpunkt **220** minus dem sensor-spezifischen Auftaktintervall **215.**

Aufgrund der sensorspezifischen Dauer des *Vorverarbeitungsintervalls* **225** können bei den unterschiedlichen Sensoren unterschiedliche Lieferzeitpunkte **230** auftreten, obwohl der physikalische Prozess zum gleichen Beobachtungszeitpunkt **220** beobachtet wurde. Diese unterschiedlichen Lieferzeitpunkte müssen in den a priori erstellten Zeitplänen für die zeitgesteuerten Nachrichten berücksichtigt sein.

In vielen Fällen benötigt ein intelligenter Sensor zusätzlich zu den *rohen Sensordaten* aktuelle *Umfeld-Informationen,* um den beabsichtigten Messwert bestimmen zu können.

Zum Beispiel erfordert eine *barometrische Höhenmessung* neben dem *gemessen Luftdruck* Umfeld-Informationen über den *aktuellen Luftdruck auf Meeresniveau* und die *aktuelle Temperatur,* um den *beabsichtigten Messwert* am Ort der Messung, die *Höhe über dem Meeresniveau,* bestimmen zu können. Der *aktuelle Luftdruck auf Meeresniveau,* der eine relativ geringe Dynamik hat, kann von einer externen Quelle, z.B. von einer Wetterstation, über das Internet erfasst werden.

Die aktuellen Umfeld-Informationen können auf verschiedene Arten erfasst werden:
1) Erweiterung des intelligenten Sensors mit zusätzlichen physikalischen Sensoren, um die *aktuellen Umfeld-Informationen* gleichzeitig zum Beobachtungszeitpunkt direkt zu erfassen. Diese Variante ist wirtschaftlich aufwendig, da jeder *intelligente Sensor* eine Vielzahl von *physikalischen Sensoren* umfassen muss.
2) Empfang von Nachrichten, in denen die aktuellen Umfeld-Informationen zum Beobachtungszeitpunkt von anderen intelligenten Sensoren oder externen Quellen geliefert werden. Diese Variante hat den Vorteil, dass die Umfeld-Informationen im gesamten Echtzeitcomputersystem nur einmal erfasst werden müssen, aber den Nachteil, dass die Messwerte nur verzögert ausgeliefert werden können.
3) Verwendung von Umfeld-Informationen, die vor der dem Beobachtungszeitpunkt erfasst wurden. Diese Variante hat den Vorteil dass die Messwerte ohne Verzögerung ausgeliefert werden können aber den Nachteil, dass die rohen Sensordaten und die Umfeld-Informationen zu unterschiedlichen Zeitpunkten erfasst werden.

Im Rahmen der Erfindung kann vorgesehen sein, dass im Falle, dass die *Umfeld-Informationen* eine geringere Dynamik haben als die *rohen Sensordaten,* der den physikalischen Sensor kontrollierende Knotenrechner aus den *rohen Sensordaten* den *Messwert* zum Beobachtungszeitpunkt unter Einbeziehung von vornehmlich vorab erfassten *Umfeld-Informationen* errechnet. Im Falle dass die *Umfeld-Informationen* die gleiche oder eine höhere Dynamik haben als die *rohen Sensordaten,* wartet der den Sensor kontrollierender Knotenrechner auf das Eintreffen der *Umfeld-Informationen* von anderen Knotenrechnern und berechnet unter Berücksichtigung dieser Umfeld-Informationen, die zum gleichen Zeitpunkt erfasst wurden wie die rohen Sensordaten, den beabsichtigten Messwert.

In vielen Echtzeitanwendungen existiert eine *implizite Redundanz* der Messwerte, die durch bekannte naturgesetzliche Beziehungen zwischen den Messdaten, die von unterschiedlichen Sensoren zu einem Beobachtungszeitpunkt erfasst wurden, hergestellt wird. Unter Anwendung dieser Naturgesetze ist es in diesen Echtzeitanwendungen möglich, die Konsistenz der zu einem Beobachtungszeitpunkt erfassten Messwerte zu überprüfen und notfalls ausgefallene Messwerte durch berechnete Messwerte zu ersetzen.

### Zitierte Literatur:

[1] Kopetz, H. Real-Time Systems, Design Principles for Distributed Embedded Applications. Springer Verlag. 2011.
[2] Kopetz, H. A Conceptual Model for the Information Transfer in Systems-of-Systems. Proc. of ISORC 2014. pp. 17-24. IEEE Press.2014.

## Patentansprüche

1. Verfahren zur periodischen Erfassung von Messwerten in einem Echtzeitcomputersystem, insbesondere ein einem verteilten Echtzeitcomputersystem, welches Echtzeitcomputersystem, insbesondere verteilte Echtzeitcomputersystem, eine Vielzahl von Sensoren, insbesondere intelligente Sensoren, Knotenrechner und Verteilereinheiten, umfasst, wobei die Sensoren, insbesondere intelligenten Sensoren, die Knotenrechner und die Verteilereinheiten Zugriff auf eine globale Zeit haben, und wobei Echtzeitdaten in dem Echtzeitcomputersystem mittels zeitgesteuerter Echtzeitnachrichten transportiert werden, wobei
in dem Echtzeitcomputersystem periodisch wiederkehrende globale Beobachtungszeitpunkte **(220)** am Beginn eines Frames festgelegt sind oder werden, und wobei jeder einen Sensor, insbesondere einen physikalischen Sensor, kontrollierende Knotenrechner ein Trigger-Signal an den Sensor, insbesondere den physikalischen Sensor, ausgibt, **dadurch gekennzeichnet, dass**
jeder einen Sensor kontrollierende Knotenrechner das Trigger-Signal zu einem sensor-spezifischen Trigger-Zeitpunkt **(210)** des durch den Knotenrechner kontrollierten Sensors, welcher spezifische Trigger-Zeitpunkt **(210)** sich aus der Differenz zwischen dem globalen Beobachtungszeitpunkt **(220)** minus einem sensor-spezifischen Auftaktintervall **(215)** errechnet, an den Sensor ausgibt, und wobei
im Falle, dass ein einen Messwert produzierender Sensor, insbesondere intelligenter Sensor, ausgefallen ist, dieser Messwert auf Basis bekannter naturgesetzlicher Beziehungen zwischen den vorhandenen, zu einem Beobachtungszeitpunkt erfassten Messwerten errechnet wird.

2. Verfahren nach Anspruch 1, **dadurch gekennzeichnet, dass** im Falle, dass *Umfeld-Informationen* eine geringere Dynamik haben als *rohe Sensordaten,* ein einen Sensor kontrollierender Knotenrechner aus den *rohen Sensordaten* einen geforderten Messwert zum Beobachtungszeitpunkt unter Einbeziehung von, insbesondere vorab erfassten, *Umfeld-Informationen* errechnet.

3. Verfahren nach Anspruch 1, **dadurch gekennzeichnet, dass** im Falle, dass *Umfeld-Informationen* die gleiche oder eine höhere Dynamik haben als *rohe Sensordaten,* ein einen Sensor kontrollierender Knotenrechner auf ein Eintreffen von Nachrichten mit *Umfeld-Informationen* von anderen Quellen wartet und unter Berücksichtigung solcher Umfeld-Informationen, die zum im Wesentlichen gleichen Zeitpunkt erfasst wurden wie die rohen Sensordaten, den geforderten Messwert errechnet.

4. Verfahren nach einem der Ansprüche 1 bis 3, **dadurch gekennzeichnet, dass** Messwerte in zeitgesteuerten Zustandsnachrichten übertragen werden.

5. Verfahren nach einem der Ansprüche 1 bis 4, **dadurch gekennzeichnet, dass** als Kommunikationsprotokoll zur zeitgesteuerten Nachrichtenübertragung TTEThernet verwendet wird.

6. Echtzeitcomputersystem, insbesondere verteiltes Echtzeitcomputersystem, welches Echtzeitcomputersystem, insbesondere verteilte Echtzeitcomputersystem, eine Vielzahl von Sensoren, insbesondere intelligente Sensoren, Knotenrechner und Verteilereinheiten umfasst, wobei die Sensoren, insbesondere intelligenten Sensoren, die Knotenrechner und die Verteilereinheiten Zugriff auf eine globale Zeit haben, und wobei Echtzeitdaten in dem Echtzeitcomputersystem mittels zeitgesteuerter Echtzeitnachrichten transportiert werden, wobei
zur periodischen Erfassung von Messwerten in dem Echtzeitcomputersystem periodisch wiederkehrende globale Beobachtungszeitpunkte **(220)** am Beginn eines Frames festgelegt sind, und wobei jeder einen Sensor, insbesondere einen physikalischen Sensor, kontrollierende Knotenrechner ein Trigger-Signal an den Sensor, insbesondere den physikalischen Sensor, ausgibt, **dadurch gekennzeichnet, dass**
jeder einen Sensor kontrollierende Knotenrechner das Trigger-Signal zu einem sensor-spezifischen Trigger-Zeitpunkt **(210)** des durch den Knotenrechner kontrollierten Sensors, welcher spezifische Trigger-Zeitpunkt **(210)** sich aus der Differenz zwischen dem globalen Beobachtungszeitpunkt **(220)** minus einem sensor-spezifischen Auftaktintervall **(215)** errechnet, an den Sensor ausgibt, und wobei
im Falle, dass ein einen Messwert produzierender Sensor, insbesondere intelligenter Sensor, ausgefallen ist, dieser Messwert auf Basis bekannter naturgesetzlicher Beziehungen zwischen den vorhandenen, zu einem Beobachtungszeitpunkt erfassten Messwerten errechnet wird.

7. Echtzeitcomputersystem nach Anspruch 6, **dadurch gekennzeichnet, dass** im Falle, dass *Umfeld-Informationen* eine geringere Dynamik haben als *rohe Sensordaten,* ein einen Sensor kontrollierender Knotenrechner aus den *rohen Sensordaten* einen geforderten Messwert zum Beobachtungszeitpunkt unter Einbeziehung von, insbesondere vorab erfassten, *Umfeld-Informationen* errechnet.

8. Echtzeitcomputersystem nach Anspruch 6, **dadurch gekennzeichnet, dass** im Falle, dass *Umfeld-Informationen* die gleiche oder eine höhere Dynamik haben als *rohe Sensordaten,* ein einen Sensor kontrollierender Knotenrechner auf ein Eintreffen von Nachrichten mit *Umfeld-Informationen* von anderen Quellen wartet und unter Berücksichtigung solcher Umfeld-Informationen, die zum im Wesentlichen gleichen Zeitpunkt erfasst wurden wie die rohen Sensordaten, den geforderten Messwert errechnet.

9. Echtzeitcomputersystem nach einem der Ansprüche 6 bis 8, **dadurch gekennzeichnet, dass** Messwerte in zeitgesteuerten Zustandsnachrichten übertragen werden.

10. Echtzeitcomputersystem nach einem der Ansprüche 6 bis 9, **dadurch gekennzeichnet, dass** als Kommunikationsprotokoll zur zeitgesteuerten Nachrichtenübertragung TTEThernet verwendet wird.

## Claims

1. A method for periodic measurement of measured values in a real time computer system, in particular in a distributed real time computer system, which real time computer system, in particular distributed real time computer system, comprises a plurality of sensors, in particular intelligent sensors, node computers and distributor units, wherein the sensors, in particular intelligent sensors, the node computers and the distributor units have access to a global time, and wherein real time data is transported in the real time computer system by means of time-triggered real time messages, wherein
in the real time computer system periodically recurring global observation times (220) are or are being determined at the start of a frame, and wherein each node computer controlling a sensor, in particular a physical sensor, emits a trigger signal to the sensor, in particular the physical sensor,
**characterised in that** each node computer controlling a sensor emits the trigger signal to the sensor at a sensor-specific trigger time (210) of the sensor controlled by the node computer, which specific trigger time (210) is calculated from the difference between the global observation time (220) minus a sensor-specific kick-off interval (215), and wherein
in case a sensor, in particular intelligent sensor, producing a measured value has failed, this measured value is calculated on the basis of known natural-law relationships between the existing measured values recorded at an observation time.

2. The method according to claim 1, **characterised in that** in case environment information has a lesser dynamics than raw sensor data, a node computer controlling a sensor calculates a required measured value from the raw sensor data at the observation time, taking into account, in particular, previously recorded environment information.

3. The method according to claim 1, **characterised in that** in case the environment information has the same or a higher dynamics than raw sensor data, such a node computer controlling a sensor waits for the arrival of messages with environment information from other sources and calculates the required measured value, taking into account such environment information, as was recorded essentially at the same point in time as the raw sensor data.

4. The method according to one of claims 1 to 3, **characterised in that** measured values are transmitted in time-triggered status messages.

5. The method according to one of claims 1 to 4, **characterised in that** the communication protocol used for time-triggered transmission of messages is the TTEThernet.

6. A real time computer system, in particular distributed real time computer system, which real time computer system, in particular distributed real time computer system, comprises a plurality of sensors, in particular intelligent sensors, node computers and distributor units, wherein the sensors, in particular intelligent sensors, the node computers and the distributor units have access to a global time, and wherein real time data is transported in the real time computer system by means of time-triggered real time messages, wherein
periodically recurring global observation times (220) are determined at the start of a frame for periodically recording of measured values in the real time computer system, and wherein each node computer controlling a sensor, in particular physical sensor, emits a trigger signal to the sensor, in particular physical sensor, **characterised in that**
each node computer controlling a sensor emits the trigger signal to the sensor at a sensor-specific point in time (210) of the sensor controlled by the node computer, which trigger-specific point in time (210) is calculated from the difference between the global observation time (220) minus a sensor-specific kick-off interval (215), and wherein
in case a sensor, in particular intelligent sensor producing a measured value, has failed, this measured value is calculated on the basis of known natural-law relationships between the existing measured values recorded at an observation time.

7. The real time computer system according to claim 6, **characterised in that** in case environment information has a lesser dynamics than raw sensor data, a node computer controlling a sensor calculates the required measured value from the raw sensor data at the observation time taking into account, in particular, previously recorded environment information.

8. The real time computer system according to claim 6, **characterised in that** in case environment information has the same or a higher dynamics than raw sensor data, a node computer controlling a sensor waits for the arrival of messages with environment information from other sources and calculates the required measured value, taking into account such environment information, as was recorded essentially at the same point in time as the raw sensor data.

9. The real time computer system according to one of claims 6 to 8, **characterised in that** measured values are transmitted in time-triggered status messages.

10. The real time computer system according to one of claims 6 to 9, **characterised in that** the communication protocol used for time-triggered transmission of messages, is the TTEThernet.

## Revendications

1. Procédé, destiné à la détection périodique de valeurs de mesure dans un système informatique en temps réel, notamment dans un système informatique en temps réel distribué, lequel système informatique en temps réel, notamment système informatique en temps réel distribué comprend une pluralité de capteurs, notamment de capteurs intelligents, des ordinateurs nodaux et des unités distributrices, les capteurs, notamment les capteurs intelligents, les ordinateurs nodaux et les unités distributrices disposant d'un accès à un temps global et des données en temps réel étant transportées dans le système informatique en temps réel à l'aide de renseignements en temps réel commandés dans le temps,
dans le système informatique en temps réel étant fixés des moments d'observation (220) globaux, périodiquement récurrents au début d'une trame, et chaque ordinateur nodal contrôlant un capteur isolé, notamment un capteur physique, délivrant un signal de déclenchement au capteur, notamment au capteur physique, **caractérisé en ce que**
chaque ordinateur nodal contrôlant un capteur délivre à l'attention du capteur le signal de déclenchement à un moment de déclenchement (210) spécifique au capteur contrôlé par l'ordinateur nodal, lequel moment de déclenchement (210) spécifique se calcule à partir de la différence entre le moment d'observation (220) global moins un intervalle de lancement (215) et
dans le cas où un capteur, notamment un capteur intelligent produisant une valeur de mesure est tombé en panne, ladite valeur de mesure étant calculée sur la base de relations naturelles entre les valeurs de mesure présentes, détectées à un moment d'observation.

2. Procédé selon la revendication 1, **caractérisé en ce que** dans le cas où des informations environnantes ont une dynamique plus faible que celle de données de capteur brutes, un ordinateur nodal contrôlant un capteur calcule à partir des données de capteur brutes une valeur de mesure exigée au moment d'observation impliquant des informations environnantes, notamment préalablement détectées.

3. Procédé selon la revendication 1, **caractérisé en ce que** dans le cas où des informations environnantes ont une même dynamique ou une dynamique supérieure à celle de données de capteur brute, un ordinateur nodal contrôlant un capteur attend une entrée de renseignements dotée d'informations environnantes à partir d'autres sources et sous considération de telles informations environnantes qui ont été détectées sensiblement au même moment que les données de capteur brutes, calcule la valeur de mesure exigée.

4. Procédé selon l'une quelconque des revendications 1 à 3, **caractérisé en ce que** des valeurs de mesure sont transmises dans des renseignements d'état commandés dans le temps.

5. Procédé selon l'une quelconque des revendications 1 à 4, **caractérisé en ce que** le protocole de communication utilisé pour la transmission de renseignements commandés dans le temps est TTEThernet.

6. Système informatique en temps réel, notamment système informatique en temps réel distribué, lequel système informatique en temps réel, notamment système informatique en temps réel distribué comprend une pluralité de capteurs, notamment de capteurs intelligents, des ordinateurs nodaux et des unités distributrices, les capteurs, notamment les capteurs intelligents, les ordinateurs nodaux et les unités distributrices ayant accès à un temps global et des données en temps réel étant transportées dans le système informatique en temps réel à l'aide de renseignements en temps réel commandés dans le temps,
pour la détection périodique de valeurs de mesure dans le système informatique en temps réel, des moments d'observation (220) globaux, périodiquement récurrents étant fixés au début d'une trame et chaque ordinateur nodal contrôlant un capteur, notamment un capteur physique délivrant un signal de déclenchement à l'attention du capteur, notamment du capteur physique, **caractérisé en ce que**
chaque ordinateur nodal contrôlant un capteur délivre à l'attention du capteur le signal de déclenchement à un moment de déclenchement (210) spécifique au capteur contrôlé par l'ordinateur nodal, lequel moment de déclenchement (210) spécifique se calcule à partir de la différence entre le moment d'observation (220) global moins un intervalle de lancement (215), et
dans le cas où un capteur, notamment un capteur intelligent produisant une valeur de mesure est tombé en panne, ladite valeur de mesure étant calculée sur la base de relations naturelles entre les valeurs de mesure présentes, détectées à un moment d'observation.

7. Système informatique en temps réel selon la revendication 6, **caractérisé en ce que** dans le cas où des informations environnantes ont une dynamique plus faible que celle de données de capteur brutes, un ordinateur nodal contrôlant un capteur calcule à partir des données de capteur brutes une valeur de mesure exigée au moment d'observation impliquant des informations environnantes, notamment préalablement détectées.

8. Système informatique en temps réel selon la revendication 6, **caractérisé en ce que** dans le cas où des informations environnantes ont une même dynamique ou une dynamique supérieure à celle de données de capteur brute, un ordinateur nodal contrôlant un capteur attend une entrée de renseignements dotée d'informations environnantes à partir d'autres sources et sous considération de telles informations environnantes qui ont été détectées sensiblement au même moment que les données de capteur brutes, calcule la valeur de mesure exigée.

9. Système informatique en temps réel selon l'une quelconque des revendications 6 à 8, **caractérisé en ce que** des valeurs de mesure sont transmises dans des renseignements d'état commandés dans le temps.

10. Système informatique en temps réel selon l'une quelconque des revendications 6 à 9, **caractérisé en ce que** le protocole de communication utilisé pour la transmission de renseignements commandés dans le temps est TTEThernet.
